# EUROPEAN PATENT APPLICATION

(11) **EP 4 629 029 A1**
(43) Date of publication of application: **08.10.2025**
(21) Application number: 22968944.3
(22) Date of filing: 22.12.2022
(51) Int. Cl.: G06F 3/01

(54) **HUMAN-MACHINE INTERACTION METHOD AND APPARATUS, AND TRANSPORTATION**

(71) Applicant: Shenzhen Yinwang Intelligent Technologies Co., Ltd., Shenzhen, Guangdong 518110 (CN)
(72) Inventor: YU, Jiapeng, Shenzhen, Guangdong 518129 (CN); LAN, Ruidong, Shenzhen, Guangdong 518129 (CN); WANG, Di, Shenzhen, Guangdong 518129 (CN); YANG, Jinghuan, Shenzhen, Guangdong 518129 (CN); SONG, Xianxi, Shenzhen, Guangdong 518129 (CN)
(74) Representative: Gill Jennings & Every LLP
(86) International application number: PCT/CN2022/141069
(87) International publication number: WO 2024/130648

(57) **Abstract**

Embodiments of this application provide a human-machine interaction method and apparatus, and a transportation means. The method may be applied to a cockpit of the transportation means, the cockpit includes a virtual assistant, and the method includes: obtaining a line-of-sight direction of a first user in the cockpit; obtaining pose information of the first user when the line-of-sight direction of the first user is on the virtual assistant; and controlling, based on the pose information of the first user, the virtual assistant to interact with the first user. Embodiments of this application may be applied to an intelligent vehicle or an electric vehicle, to help improve a sense of interaction when a user interacts with a virtual assistant, thereby helping improve human-machine interaction experience of the user.

## Description

### TECHNICAL FIELD

Embodiments of this application relate to the field of human-machine interaction, and more specifically, to a human-machine interaction method and apparatus, and a transportation means.

### BACKGROUND

With development of vehicle intelligence, virtual assistants are disposed on an increasing quantity of vehicles. For ease of interaction, interaction between a user and a virtual assistant is mostly voice interaction. Such an interaction manner is simple and lacks a sense of interaction, consequently, human-machine interaction experience of a user is affected.

### SUMMARY

Embodiments of this application provide a human-machine interaction method and apparatus, and a transportation means, to help improve a sense of interaction when a user interacts with a virtual assistant, thereby helping improve human-machine interaction experience of the user.

The transportation means in this application may include road transportation, water transportation, air transportation, an industrial device, an agricultural device, an entertainment device, or the like. For example, the transportation means may be a vehicle. The vehicle is a vehicle in a broad sense, and may be transportation (like a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), an entertainment device, or a toy vehicle. A type of the vehicle is not specifically limited in embodiments of this application. For another example, the transportation means may be transportation like an aircraft or a ship.

According to a first aspect, a human-machine interaction method is provided, applied to a cockpit of a transportation means, where the cockpit includes a virtual assistant, and the method includes: obtaining a line-of-sight direction of a first user in the cockpit; obtaining pose information of the first user when the line-of-sight direction of the first user is on the virtual assistant; and controlling, based on the pose information of the first user, the virtual assistant to interact with the first user.

In embodiments of this application, when the line-of-sight direction of the user is on the virtual assistant, the virtual assistant may be controlled to interact with the user based on the pose information of the user. In this way, the virtual assistant responds to a pose of the user, to help improve human-machine interaction experience when the user interacts with the virtual assistant; and the pose information of the user is obtained when the line-of-sight direction of the user is on the virtual assistant, to help reduce computing overheads of the transportation means, thereby helping reduce power consumption of the transportation means.

With reference to the first aspect, in some implementations of the first aspect, the pose information of the first user includes a first gesture pose, and controlling, based on the pose information of the first user, the virtual assistant to interact with the first user includes: controlling, based on the first gesture pose, the virtual assistant to interact with the first user.

In embodiments of this application, when the line-of-sight direction of the first user is on the virtual assistant, the virtual assistant may be controlled to respond to a gesture pose of the user, to help improve human-machine interaction experience when the user interacts with the virtual assistant.

In some possible implementations, the transportation means stores a mapping relationship between a gesture pose and an interaction action, and controlling, based on the first gesture pose, the virtual assistant to interact with the first user includes: controlling, based on the first gesture pose and the mapping relationship, the virtual assistant to interact with the first user through a first interaction action.

In some possible implementations, the mapping relationship may alternatively be stored in a cloud server. After the transportation means obtains human body pose information of the first user, the transportation means may send the human body pose information to the cloud server. The cloud server may determine a first interaction action based on the human body pose information and the mapping relationship. The cloud server may send information about the first interaction action to the transportation means. Therefore, the transportation means may control the virtual assistant to interact with the first user through the first interaction action.

In some possible implementations, before controlling, based on the first gesture pose, the virtual assistant to interact with the first user, the method further includes: detecting an operation of setting a mapping relationship between a first gesture pose and a first interaction action by the user.

In embodiments of this application, the user may set, in the transportation means, the mapping relationship that is between the gesture pose and the interaction action of the virtual assistant and that is expected by the user. When the first gesture pose of the user is detected, the virtual assistant may be controlled, based on the mapping relationship that is between the gesture pose and the interaction action of the virtual assistant and that is set by the user, to interact with the first user through a corresponding interaction action. This improves human-machine interaction experience of the user, and also helps improve flexibility of setting a mapping relationship between a gesture pose and a virtual assistant interaction action.

With reference to the first aspect, in some implementations of the first aspect, the pose information includes at least one of a face pinch gesture, a touch gesture, a beckoning gesture, and a throw gesture.

In some possible implementations, the pose information further includes a head pinch gesture or a body pinch gesture.

In some possible implementations, the pose information further includes a finger rotation gesture. For example, a forward direction of the transportation means is an x-axis direction, and a direction perpendicular to a plane on which the transportation means is located is a z-axis direction. When it is detected that a finger of the user rotates around the x-axis, the virtual assistant may be controlled to turn over or flip. For another example, when it is detected that a finger of the user rotates around the z-axis, the virtual assistant may be controlled to rotate 360° in the z-axis direction.

In some possible implementations, the virtual assistant may be a virtual pet.

In embodiments of this application, when the face pinch gesture, the touch gesture, the beckoning gesture, and the throw gesture of the user are detected, the virtual assistant may respond to a corresponding gesture pose. This helps improve human-machine interaction experience of interaction between the user and the virtual assistant, and also helps increase a sense of intimacy of the user for the virtual assistant.

In some possible implementations, the method further includes: obtaining image information of a pet; and generating a virtual pet based on the image information of the pet.

This embodiment of this application may be divided into a modeling phase and an interaction phase. In the modeling phase, a three-dimensional model of the virtual pet may be generated based on an input of the user. In the interaction phase, the virtual assistant may be controlled to respond to the pose of the user.

In some possible implementations, before generating the virtual pet based on the image information of the pet, the method further includes: prompting the user to select a material of the virtual pet, where the material of the virtual pet includes a recoverable material (for example, an elastic material) and an unrecoverable material (for example, a clay figurine); and generating the virtual pet based on the material selected by the user.

In some possible implementations, the virtual assistant is displayed on the first display apparatus, a material of the virtual assistant is an unrecoverable material, and before controlling the virtual assistant to interact with the first user, the method includes: controlling the first display apparatus to display a first interaction image of the virtual assistant; and controlling the virtual assistant to interact with the first user includes: controlling the first display apparatus to display a second interaction image of the virtual assistant; and when the interaction between the virtual assistant and the first user ends, keeping displaying the second interaction image.

That the interaction between the virtual assistant and the first user ends may also be understood as that the line-of-sight direction of the first user is not on the virtual assistant.

For example, it is detected, in the modeling phase, that the material of the virtual pet selected by the user is an unrecoverable material. In the interaction phase, when the pose information of the user is not detected, a normal three-dimensional model of the virtual pet may be displayed (for example, a face of the virtual pet is not pinched up and keeps smiling). When the user makes the face pinch gesture, the virtual assistant may be controlled to make an animation in which the face is pinched up. After the user stops making the face pinch gesture, the virtual assistant may be controlled to keep the face in a pinched-up state. In this way, after the user interacts with the virtual assistant, the virtual assistant is not restored to an original image, so that the virtual assistant can be used as a punching bag of the user. This helps to vent a negative emotion of the user when the user is in a bad mood.

For another example, it is detected, in the modeling phase, that the material of the virtual pet selected by the user is a recoverable material. In the interaction phase, when the user makes the face pinch gesture, the virtual assistant may be controlled to make a face pinch animation. After the user stops making the face pinch gesture, the virtual assistant may be controlled to restore to a normal three-dimensional model.

In some possible implementations, generating the virtual pet based on the image information of the pet includes: generating, based on the image information of the pet, a three-dimensional model of a virtual pet corresponding to the pet; and restoring a first organ based on an operation performed by the user on the first organ in the three-dimensional model, to generate a restored three-dimensional model of the virtual pet.

In some possible implementations, the operation performed by the user on the first organ in the three-dimensional model includes an air gesture. During modeling, the model can be pinched by using the air gesture. The air gesture may include a rotation gesture or a flip gesture, and an organ image or a body image of the virtual pet is restored through pinching or patting, until the virtual pet presents an image expected by the user.

For example, in the modeling phase, an original three-dimensional model of the pet may be generated by displaying on a display apparatus based on the image information of the pet, and a virtual hand is displayed on the display apparatus. The virtual hand may move with movement of the hand of the user. When it is detected that the hand of the user moves towards the nose of the original three-dimensional model, the virtual hand on the display apparatus is controlled to move to the nose of the original three-dimensional model. When a gesture of pinching the nose by the hand of the user is detected and the hand of the user moves in a direction away from the display apparatus, the nose in the original three-dimensional model may be restored, to obtain a restored three-dimensional model. For example, a longer moving distance of the hand of the user indicates a sharper nose of the virtual pet.

In embodiments of this application, the user may upload a photo or a video of a pet of the user to the transportation means, so that the transportation means can generate a virtual pet based on the photo or the video of the pet. When the user interacts with the virtual pet, this helps further improve user experience. In addition, the user may select a material of the virtual assistant, or the user may change the image of the virtual assistant to an image expected by the user through an operation. This helps improve flexibility of setting the virtual assistant by the user, and helps improve user experience.

With reference to the first aspect, in some implementations of the first aspect, the pose information includes the throw gesture, and controlling the virtual assistant to interact with the first user includes: controlling, based on at least one of the line-of-sight direction of the first user, a throw angle corresponding to the throw gesture, and a throw speed corresponding to the throw gesture, the virtual assistant to respond to the throw gesture.

In embodiments of this application, when the throw gesture of the user is detected, the virtual assistant may be controlled, based on at least one of the line-of-sight direction of the user, the throw angle corresponding to the throw gesture, and the throw speed corresponding to the throw gesture, to respond to the throw gesture, so that feedback of the virtual assistant on the throw gesture better meets an expectation of the user. This helps improve human-machine interaction experience of the user.

In some possible implementations, controlling the virtual assistant to respond to the throw gesture includes: controlling the virtual assistant to perform a ball picking operation.

In some possible implementations, when the throw speed corresponding to the throw gesture is greater than or equal to a preset speed threshold, a speed at which the virtual assistant picks up a ball may be controlled to be a first speed; or when the throw speed corresponding to the throw gesture is less than a preset speed threshold, a speed at which the virtual assistant picks up a ball may be controlled to be a second speed, where the first speed is greater than the second speed.

In some possible implementations, the transportation means is a vehicle, the vehicle includes a driver area and a non-driver area, the first user is a user in the driver area, and the method further includes: when both the line-of-sight direction of the first user and a line-of-sight direction of a third user in the cockpit are on the virtual assistant and the vehicle is in a driving state, controlling the virtual assistant to interact with the third user.

In embodiments of this application, when it is detected that line-of-sight directions of the user in the driver area and the user in the non-driver area are both on the virtual assistant and the vehicle is currently in the driving state, the virtual assistant may be controlled to interact with the third user. In this way, distraction caused to the driver area when the virtual assistant interacts with the user in the driver area can be avoided. In addition, a pose of the user in the driver area is not responded to, so that attention of the user in the driver area can be transferred to the driving vehicle, thereby helping improve safety of driving the vehicle by the user.

In some possible implementations, the method further includes: prompting the first user to focus on driving the vehicle.

In some possible implementations, the method further includes: obtaining a line-of-sight direction of a fourth user in the cockpit; and when both the line-of-sight direction of the first user and the line-of-sight direction of the fourth user are on the virtual assistant, and the transportation means stores the information about the first user but does not store the information about the fourth user, controlling the virtual assistant to interact with the first user.

In embodiments of this application, when a plurality of users expect to interact with the virtual assistant, the virtual assistant may be controlled, based on user information stored in the transportation means, to interact with the first user. This helps improve human-machine interaction experience between the virtual assistant and the user who has entered the user information into the transportation means, and also helps avoid interference caused by an interaction action of the virtual assistant to an unfamiliar passenger when the unfamiliar passenger watches the virtual assistant.

The information about the user may include biometric feature information of the user, for example, human face information and iris information.

With reference to the first aspect, in some implementations of the first aspect, the pose information includes a human body pose, and controlling, based on the pose information of the first user, the virtual assistant to interact with the first user includes: controlling, based on the human body pose, the virtual assistant to interact with the first user.

With reference to the first aspect, in some implementations of the first aspect, the method further includes: controlling a multimedia apparatus in the transportation means to play a multimedia file. Controlling, based on the pose information of the first user, the virtual assistant to interact with the first user includes: controlling the virtual assistant to imitate a pose of the first user in a process of playing the multimedia file.

In embodiments of this application, in a process of playing the multimedia file, the virtual assistant may be controlled to imitate the pose of the first user, to create a feeling of dancing with the virtual assistant for the user, thereby helping improve human-machine interaction experience of the user.

With reference to the first aspect, in some implementations of the first aspect, obtaining the pose information of the first user when the line-of-sight direction of the first user is on the virtual assistant includes: obtaining the pose information of the first user when duration in which the line-of-sight direction of the first user is on the virtual assistant is greater than or equal to preset duration.

In embodiments of this application, when the duration in which the line-of-sight direction of the first user lasts on the virtual assistant is greater than or equal to the preset duration, the pose information of the first user is obtained. This helps further improve accuracy of responding to the pose of the user by the virtual assistant.

For example, the preset duration is 1 second (second, s).

With reference to the first aspect, in some implementations of the first aspect, the virtual assistant is a physical virtual assistant.

In some possible implementations, the transportation means is a vehicle, the vehicle includes a front-row area and a rear-row area, and the physical virtual assistant is located in the front-row area of the vehicle.

With reference to the first aspect, in some implementations of the first aspect, the method further includes: obtaining a line-of-sight direction of a second user in the rear-row area; when the line-of-sight direction of the second user is on the physical virtual assistant, controlling a display apparatus in the rear-row area to display a first image and obtaining human body pose information of the second user, where the first image includes an image of the physical virtual assistant; and controlling, based on the human body pose information of the second user, the display apparatus in the rear-row area to display a second image, where the second image includes an image, obtained in response to a human body pose of the second user, of the virtual assistant.

In embodiments of this application, when the second user in the rear row expects to interact with the physical virtual assistant in the front row, image information of the physical virtual assistant may be displayed on the display apparatus in the rear row, and the display apparatus in the rear row may be controlled to display an image of interaction between the physical virtual assistant and the second user. In this way, a sense of alienation during interaction between the user in the rear row and the physical virtual assistant due to an excessively long distance can be avoided, and this helps improve human-machine interaction experience when the user in the rear row interacts with the physical virtual assistant.

With reference to the first aspect, in some implementations of the first aspect, the virtual assistant is displayed on a display apparatus in the cockpit.

In some possible implementations, that the line of sight of the user is on the virtual assistant may include that the line of sight of the user is on the display apparatus that displays the virtual assistant.

In some possible implementations, controlling the virtual assistant to interact with the first user includes: controlling a first display apparatus in the cockpit to display a video or an animation in which the virtual assistant interacts with the first user.

In some possible implementations, the first display apparatus is associated with an area in which the first user is located.

In some possible implementations, the method further includes: obtaining a line-of-sight direction of a fifth user in the cockpit; when the line-of-sight direction of the fifth user is on the virtual assistant, switching from controlling the first display apparatus to display the virtual assistant to controlling a second display apparatus to display the virtual assistant, and obtaining pose information of the fifth user, where the second display apparatus is associated with an area in which the fifth user is located; and controlling, based on the pose information of the fifth user, the second display apparatus to display an image in which the virtual assistant interacts with the fifth user.

That the second display apparatus is associated with the area in which the fifth user is located includes: The second display apparatus is a display apparatus in the area in which the fifth user is located. For example, the fifth user is located in the front passenger area, and the second display apparatus may be a front passenger entertainment display.

In embodiments of this application, when the line-of-sight direction of the fifth user in the cockpit is on the virtual assistant, controlling the first display apparatus to display the virtual assistant may be switched to controlling the second display apparatus to display the virtual assistant. In this way, it can be ensured that the virtual assistant is always displayed on the display apparatus closest to the user. This increases a sense of intimacy of interaction between the user and the virtual assistant, helps improve human-machine interaction experience of the user, and also helps improve intelligence of the transportation means.

In some possible implementations, the method further includes: when the line-of-sight direction of the fifth user is on the virtual assistant, prompting the virtual assistant to be displayed on a display apparatus in the area in which the fifth user is located.

In some possible implementations, prompting the virtual assistant to be displayed on the display apparatus in the area in which the fifth user is located includes: prompting, via a sound-making apparatus to make an alert tone, the virtual assistant to be displayed on the display apparatus in the area in which the fifth user is located.

In some possible implementations, the sound-making apparatus may be a sound-making apparatus near the second display apparatus. In this way, the line-of-sight direction of the fifth user can be quickly switched from gazing at the virtual assistant on the first display apparatus to gazing at the virtual assistant on the second display apparatus, so that the fifth user can quickly find that the virtual assistant has been displayed on a display apparatus closest to the fifth user. This helps improve human-machine interaction experience of the user.

In some possible implementations, the physical virtual assistant and the virtual assistant displayed on the display apparatus may respond to the interaction action of the user differently. For example, the physical virtual assistant is located in a plane area in the front-row area, and the physical virtual assistant may move in the plane area. When the face pinch gesture of the user is detected, the expression of the physical virtual assistant may be controlled to change. If the virtual assistant is displayed on the display apparatus, when the face pinch gesture of the user is detected, animation effect of pinching the face of the virtual assistant may be displayed on the display apparatus.

For another example, when the throw gesture of the user is detected and a throw direction corresponding to the throw gesture is a direction from the driver area to the front passenger area, the physical virtual assistant may be controlled to move from a position close to the driver area in the plane area to a position close to the front passenger area. If the virtual assistant is displayed on the display apparatus, when the throw gesture of the user is detected, animation effect that the virtual assistant moves from the driver area to the front passenger area to pick up a ball may be displayed on the display apparatus.

With reference to the first aspect, in some implementations of the first aspect, obtaining the line-of-sight direction of the first user in the cockpit includes: obtaining the line-of-sight direction of the first user when the virtual assistant is in a wakeup state.

According to a second aspect, a human-machine interaction apparatus is provided. The apparatus includes: an obtaining unit, configured to obtain a line-of-sight direction of a first user in a cockpit of a transportation means, where the cockpit includes a virtual assistant, where the obtaining unit is further configured to obtain pose information of the first user when the line-of-sight direction of the first user is on the virtual assistant; and a control unit, configured to control, based on the pose information of the first user, the virtual assistant to interact with the first user.

With reference to the second aspect, in some implementations of the second aspect, the pose information includes at least one of a face pinch gesture, a touch gesture, a beckoning gesture, and a throw gesture.

With reference to the second aspect, in some implementations of the second aspect, the pose information includes the throw gesture, and the control unit is configured to: control, based on at least one of the line-of-sight direction of the first user, a throw angle corresponding to the throw gesture, and a throw speed corresponding to the throw gesture, the virtual assistant to respond to the throw gesture.

With reference to the second aspect, in some implementations of the second aspect, the control unit is configured to: control a multimedia apparatus in the transportation means to play a multimedia file; and control the virtual assistant to imitate a pose of the first user in a process of playing the multimedia file.

With reference to the second aspect, in some implementations of the second aspect, the obtaining unit is configured to obtain the pose information of the first user when duration in which the line-of-sight direction of the first user is on the virtual assistant is greater than or equal to preset duration.

With reference to the second aspect, in some implementations of the second aspect, the virtual assistant is a physical virtual assistant, or the virtual assistant is displayed on a display apparatus in the cockpit.

With reference to the second aspect, in some implementations of the second aspect, the transportation means includes a front-row area and a rear-row area, and the virtual assistant is a physical virtual assistant located in the front-row area. The obtaining unit is further configured to obtain a line-of-sight direction of a second user in the rear-row area. The control unit is further configured to: when the line-of-sight direction of the second user is on the physical virtual assistant, control a display apparatus in the rear-row area to display a first image and obtain human body pose information of the second user, where the first image includes an image of the physical virtual assistant. The control unit is further configured to control, based on the human body pose information of the second user, the display apparatus in the rear-row area to display a second image, where the second image includes an image, obtained in response to a human body pose of the second user, of the virtual assistant.

With reference to the second aspect, in some implementations of the second aspect, the virtual assistant is displayed on the first display apparatus, and the first display apparatus is associated with a first area in which the first user is located. The obtaining unit is further configured to obtain a line-of-sight direction of a third user in a second area. The control unit is further configured to: when the line-of-sight direction of the third user is on the virtual assistant, switch from controlling the first display apparatus to display the virtual assistant to controlling a second display apparatus to display the virtual assistant, where the second display apparatus is associated with the second area. The obtaining unit is further configured to obtain human body pose information of the third user. The control unit is further configured to control, based on the human body pose information of the third user, the second display apparatus to display a third image, where the third image includes an image, obtained in response to a human body pose of the third user, of the virtual assistant.

With reference to the second aspect, in some implementations of the second aspect, the virtual assistant is displayed on the first display apparatus, and a material of the virtual assistant is an unrecoverable material. The control unit is configured to: before controlling the virtual assistant to interact with the first user, control the first display apparatus to display a first interaction image of the virtual assistant; control, based on human body pose information of the first user, the first display apparatus to display a second interaction image of the virtual assistant; and when the interaction between the virtual assistant and the first user ends, keep controlling the first display apparatus to display the second interaction image.

With reference to the second aspect, in some implementations of the second aspect, the obtaining unit is configured to: when the virtual assistant is in a wakeup state, obtain the line-of-sight direction of the first user.

According to a third aspect, a control apparatus is provided, where the control apparatus includes a processing unit and a storage unit, the storage unit is configured to store instructions, and the processing unit executes the instructions stored in the storage unit, so that the control apparatus performs any possible method according to the first aspect.

According to a fourth aspect, a control system is provided. The system includes a physical virtual assistant and a computing platform. The computing platform includes any possible apparatus according to the second aspect or the third aspect.

According to a fifth aspect, a control system is provided. The system includes a display apparatus and a computing platform. The display apparatus is configured to display a virtual assistant. The computing platform includes any possible apparatus according to the second aspect or the third aspect.

According to a sixth aspect, a transportation means is provided. The transportation means includes any possible apparatus in the second aspect, or includes the apparatus according to the third aspect, or includes the system according to the fourth aspect, or includes the system according to the fifth aspect.

In some possible implementations, the transportation means is a vehicle.

According to a seventh aspect, a computer program product is provided. The computer program product includes computer program code. When the computer program code is run on a computer, the computer is enabled to perform any possible method according to the first aspect.

It should be noted that all or some of the computer program code may be stored in a first storage medium. The first storage medium may be packaged together with a processor, or may be packaged separately from a processor. This is not specifically limited in embodiments of this application.

According to an eighth aspect, a computer-readable medium is provided. The computer-readable medium stores program code. When the computer program code is run on a computer, the computer is enabled to perform any possible method according to the first aspect.

According to a ninth aspect, an embodiment of this application provides a chip system. The chip system includes a processor configured to invoke a computer program or computer instructions stored in a memory, so that the processor performs any possible method according to the first aspect.

With reference to the ninth aspect, in a possible implementation, the processor is coupled to the memory through an interface.

With reference to the ninth aspect, in a possible implementation, the chip system further includes the memory. The memory stores the computer program or the computer instructions.

In embodiments of this application, the virtual assistant responds to a pose of the user, to help improve human-machine interaction experience when the user interacts with the virtual assistant; and the pose information of the user is obtained when the line-of-sight direction of the user is on the virtual assistant, to help reduce computing overheads of the transportation means, thereby helping reduce power consumption of the transportation means.

The user may set the mapping relationship that is between the gesture pose and the interaction action of the virtual assistant and that is expected by the user. This helps improve human-machine interaction experience of the user, and also helps improve flexibility of setting the mapping relationship between the gesture pose and the interaction action of the virtual assistant.

The virtual pet is generated based on the photo or the video of the pet. When the user interacts with the virtual pet, this helps further improve user experience. In addition, the user may select a material of the virtual assistant, or the user may change the image of the virtual assistant to an image expected by the user through an operation. This helps improve flexibility of setting the virtual assistant by the user, and helps improve user experience.

The virtual assistant is controlled, based on at least one of the line-of-sight direction of the user, the throw angle corresponding to the throw gesture, and the throw speed corresponding to the throw gesture, to respond to the throw gesture, so that feedback of the virtual assistant on the throw gesture better meets an expectation of the user. This helps improve human-machine interaction experience of the user.

When a plurality of users expect to interact with the virtual assistant, a pose of the user in the driver area is not responded to, so that attention of the user in the driver area can be transferred to the driving vehicle, thereby helping improve safety of driving the vehicle by the user.

When a plurality of users expect to interact with the virtual assistant, the virtual assistant may be controlled, based on the user information stored in the transportation means, to interact with a user who has entered the user information into the transportation means. This helps avoid a case in which the interaction action of the virtual assistant interferes with an unfamiliar passenger when the unfamiliar passenger watches the virtual assistant.

In a process of playing the multimedia file, the virtual assistant may be controlled to imitate the pose of the first user, to create a feeling of dancing with the virtual assistant for the user, thereby helping improve human-machine interaction experience of the user.

When the second user in the rear row expects to interact with the physical virtual assistant in the front row, image information of the physical virtual assistant may be displayed on the display apparatus in the rear row. In this way, a sense of alienation during interaction between the user in the rear row and the physical virtual assistant due to an excessively long distance can be avoided, and this helps improve human-machine interaction experience when the user in the rear row interacts with the physical virtual assistant.

### BRIEF DESCRIPTION OF DRAWINGS

FIG. 1 is a functional block diagram of a transportation means according to an embodiment of this application;
FIG. 2 is a diagram of display distribution in a vehicle cockpit according to an embodiment of this application;
FIG. 3 shows a group of GUIs according to an embodiment of this application;
FIG. 4 shows another group of GUIs according to an embodiment of this application;
FIG. 5 shows another group of GUIs according to an embodiment of this application;
FIG. 6 shows another group of GUIs according to an embodiment of this application;
FIG. 7 shows another group of GUIs according to an embodiment of this application;
FIG. 8 is a diagram of estimating a line-of-sight direction of a user according to an embodiment of this application;
FIG. 9 is a diagram of estimating a gesture pose of a user according to an embodiment of this application;
FIG. 10 is a schematic flowchart of a human-machine interaction method according to an embodiment of this application;
FIG. 11(a) to FIG. 11(e) show another group of GUIs according to an embodiment of this application; and
FIG. 12 is a block diagram of a human-machine interaction apparatus according to an embodiment of this application.

### DESCRIPTION OF EMBODIMENTS

The following describes technical solutions in embodiments of this application with reference to accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and represents that three relationships may exist. For example, at least one of A and B may represent the following three cases: Only A exists, both A and B exist, and only B exists.

In embodiments of this application, prefix words such as "first" and "second" are used only to distinguish between different described objects, and do not limit a position, a sequence, a priority, a quantity, content, or the like of the described objects. In embodiments of this application, use of a prefix word, for example, an ordinal number, used to distinguish between the described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more.

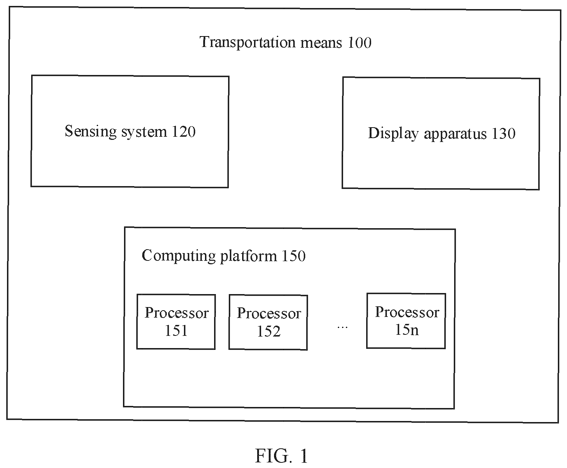

FIG. 1 is a functional block diagram of a transportation means 100 according to an embodiment of this application. The transportation means 100 may include a sensing system 120, a display apparatus 130, and a computing platform 150. The sensing system 120 may include one or more sensors that sense information about an ambient environment of the transportation means 100. For example, the sensing system 120 may include a positioning system. The positioning system may be a global positioning system (global positioning system, GPS), a BeiDou system, or another positioning system. The sensing system 120 may further include one or more of an inertial measurement unit (inertial measurement unit, IMU), a lidar, a millimeter-wave radar, an ultrasonic radar, and a camera apparatus.

Some or all functions of the transportation means 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The display apparatus 130 in a cockpit is mainly classified into two types: a first type is an in-vehicle display, and a second type is a projection display, for example, a head-up display (head-up display, HUD) apparatus. The in-vehicle display is a physical display, and is an important part of an in-vehicle infotainment system. A plurality of displays may be disposed in the cockpit, for example, a digital dashboard display, a central display screen, a display in front of a passenger in a front passenger seat (also referred to as a front-row passenger), a display in front of a rear-seat passenger on the left, and a display in front of a rear-seat passenger on the right. Even a window may be used as a display for display. The head-up display is also referred to as a head-up display system. The head-up display is mainly configured to display driving information such as a speed and navigation on a display device (for example, a windshield) in front of a driver, to reduce line-of-sight transfer time of the driver, avoid a pupil change caused by a line-of-sight transfer of the driver, and improve traveling safety and comfort. For example, the HUD includes a combiner-HUD (combiner-HUD, C-HUD) system, a windshield-HUD (windshield-HUD, W-HUD) system, and an augmented reality HUD (augmented reality HUD, AR-HUD) system. It should be understood that the HUD may also have another type of system with technology evolution. This is not limited in this application.

The foregoing display apparatus 130 is described by using the in-vehicle display and the projection display as an example. Embodiments of this application are not limited thereto. For example, the display apparatus 130 may alternatively be a light display or a projection screen.

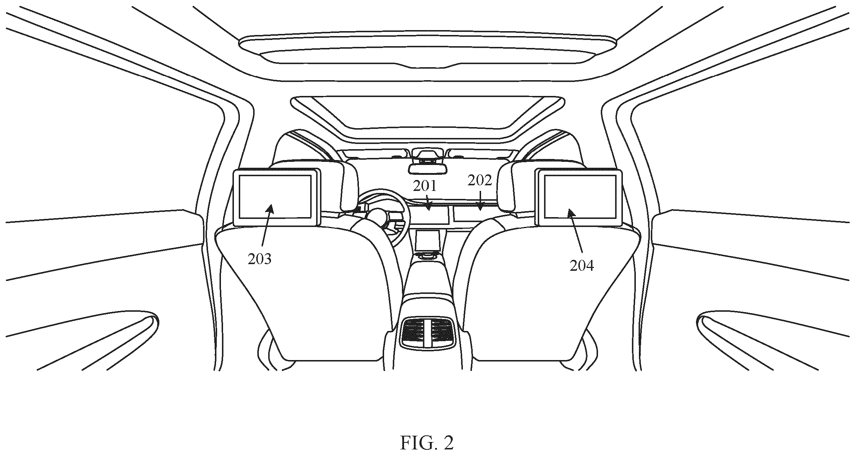

FIG. 2 is a diagram of an example of distribution in a vehicle cockpit according to an embodiment of this application. As shown in FIG. 2, a cockpit of a vehicle may include a display 201 (or may be referred to as a central display screen), a display 202 (or may be referred to as a front passenger entertainment screen), a display 203 (or may be referred to as a second-row entertainment screen in a left area), a display 204 (or may be referred to as a second-row entertainment screen in a right area), and an instrument panel.

It should be understood that a graphical user interface (graphical user interface, GUI) in the following embodiments is described by using a five-seat vehicle shown in FIG. 2 as an example. Embodiments of this application are not limited thereto. For example, a cockpit of a seven-seat sport utility vehicle (sport utility vehicle, SUV) may include a central display screen, a front passenger entertainment screen, a second-row entertainment screen in a left area, a second-row entertainment screen in a right area, a third-row entertainment screen in a left area, and a third-row entertainment screen in a right area. For another example, a cockpit of a bus may include a front-row entertainment screen and a rear-row entertainment screen; or may include a display in a driving area and an entertainment screen in a passenger area. In an implementation, the entertainment screen in the passenger area may alternatively be disposed on a top of the cockpit.

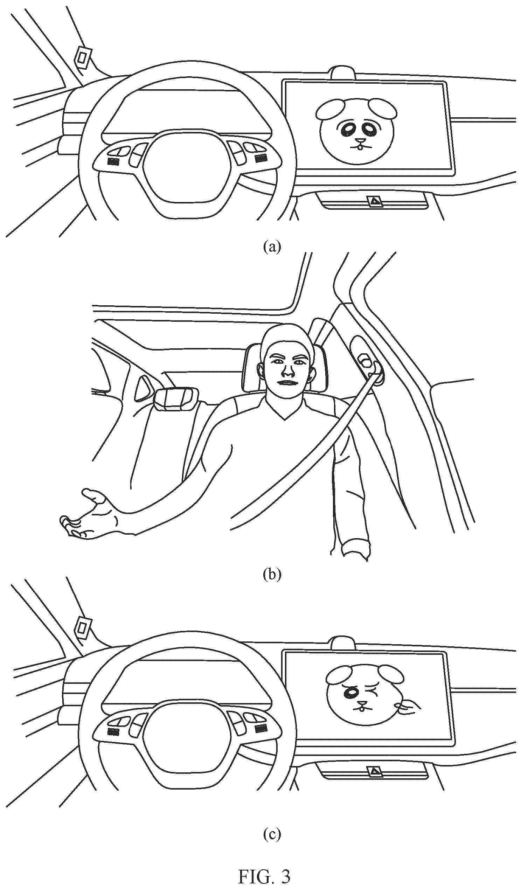

For example, FIG. 3 shows a group of GUIs according to an embodiment of this application.

As shown in (a) in FIG. 3, a vehicle may display a virtual assistant (for example, a virtual pet Xiao A) on a display 201.

In an embodiment, when it is detected that a user 1 in a driver area sends a voice wakeup instruction "Xiao A Xiao A", the vehicle may display the virtual pet Xiao A on the display 201.

In an embodiment, the virtual pet Xiao A may be set when the vehicle is delivered from a factory; or the virtual assistant Xiao A may be selected by the user 1 from a plurality of virtual assistants. For example, the vehicle includes a plurality of virtual assistants. When an operation of selecting the virtual pet Xiao A from the plurality of virtual assistants by the user 1 is detected, an association relationship between the virtual pet Xiao A and the user 1 may be established. When it is detected that the user 1 sends the voice wakeup instruction, an area in which the user 1 is located may be determined based on information about captured image information through a camera in a cockpit (for example, a camera of a driver monitor system (driver monitor system, DMS) or a camera of a cabin monitor system (cabin monitor system, CMS)). For example, when it is detected that the area in which the user 1 is located is the driver area, the virtual pet Xiao A may be displayed on the display 201 based on the association relationship.

In an embodiment, the virtual pet Xiao A may alternatively be generated through image data. For example, when it is detected that the user uploads a pet image (for example, a photo or a video of a pet) that the user likes to the vehicle, and selects an operation of generating a three-dimensional (3-dimensional, 3D) model of a corresponding virtual pet, the vehicle may generate a three-dimensional model of the virtual pet based on the pet image. In addition, the user may further choose to name the 3D model of the virtual pet (for example, Xiao A). In this way, when it is detected that a user sends a voice wakeup instruction "Xiao A Xiao A", the vehicle may display the virtual pet Xiao A on the display 201.

As shown in (b) in FIG. 3 and (c) in FIG. 3, when a face pinch gesture of the user 1 is detected, the vehicle may display, on the display 201, animation effect that the face of the virtual pet Xiao A is pinched up.

In an embodiment, when the face pinch gesture of the user 1 is detected, the vehicle may display, on the display 201, the animation effect that the face of the virtual pet Xiao A is pinched up, including: When it is detected that a line-of-sight direction of the user 1 is on the virtual pet Xiao A and the face pinch gesture of the user 1 is detected, the vehicle may display, on the display 201, the animation effect that the face of the virtual pet Xiao A is pinched up.

In an embodiment, when it is detected that the line-of-sight direction of the user 1 is on the virtual pet Xiao A and the face pinch gesture of the user 1 is detected, the vehicle may display, on the display 201, the animation effect that the face of the virtual pet Xiao A is pinched up, including: When it is detected that duration in which the line-of-sight direction of the user 1 is on the virtual pet Xiao A is greater than or equal to preset duration, and the face pinch gesture of the user 1 is detected, the vehicle may display, on the display 201, the animation effect that the face of the virtual pet Xiao A is pinched up.

For example, the preset duration is 1s.

In an embodiment, when the face pinch gesture of the user 1 is detected, the vehicle may further send a voice signal through the virtual pet Xiao A, to respond to the face pinch gesture of the user 1. For example, the vehicle may send voice information "Owner, what's going on" through the virtual pet Xiao A.

In this embodiment of this application, when the face pinch gesture of the user is detected, the virtual pet may respond to the face pinch gesture by pinching the face. Interaction between the user and the virtual assistant is improved through body movement interaction. This helps improve human-machine interaction experience of the user.

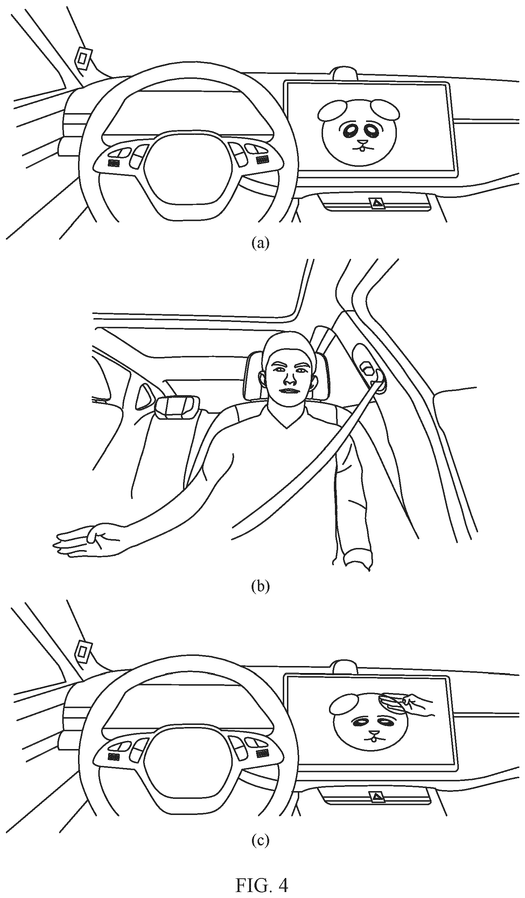

For example, FIG. 4 shows a group of GUIs according to an embodiment of this application.

As shown in (a) in FIG. 4, a vehicle may display a virtual assistant (for example, a virtual pet Xiao A) on a display 201.

In an embodiment, when it is detected that a user 1 in a driver area sends a voice wakeup instruction "Xiao A Xiao A", the vehicle may display the virtual pet Xiao A on the display 201.

As shown in (b) in FIG. 4 and (c) in FIG. 4, when a touch gesture of the user 1 is detected, the vehicle may display, on the display 201, the virtual pet Xiao A to enjoy animation effect of touching.

In an embodiment, when the touch gesture of the user 1 is detected, the vehicle may display, on the display 201, the virtual pet Xiao A to enjoy the animation effect of touching, including: When it is detected that a line-of-sight direction of the user 1 is on the virtual pet Xiao A and the touch gesture of the user 1 is detected, the vehicle may display, on the display 201, the virtual pet Xiao A to enjoy the animation effect of touching.

In an embodiment, when it is detected that the line-of-sight direction of the user 1 is on the display 201 and the touch gesture of the user 1 is detected, the vehicle may display, on the display 201, the virtual pet Xiao A to enjoy the animation effect of touching, including: When it is detected that duration in which the line-of-sight direction of the user 1 is on the virtual pet Xiao A is greater than or equal to preset duration, and the touch gesture of the user 1 is detected, the vehicle may display, on the display 201, the virtual pet Xiao A to enjoy the animation effect of touching.

In an embodiment, when the touch gesture of the user 1 is detected, the vehicle may further send a voice signal through the virtual pet Xiao A, to respond to the touch gesture of the user 1. For example, the vehicle may send voice information "Owner, I am so comfortable" through the virtual pet Xiao A.

In this embodiment of this application, when the touch gesture of the user is detected, the virtual pet may respond to the touch gesture by enjoying touching. Interaction between the user and the virtual assistant is improved through body movement interaction. This helps improve human-machine interaction experience of the user.

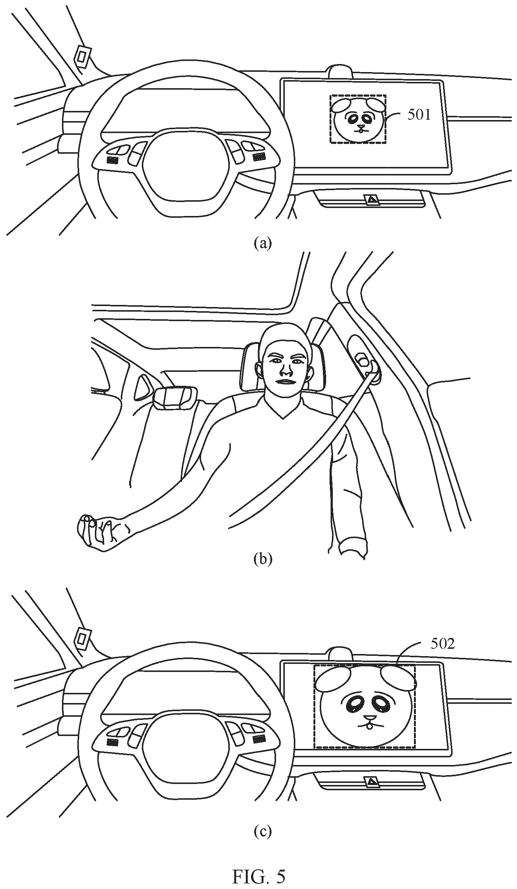

For example, FIG. 5 shows a group of GUIs according to an embodiment of this application.

As shown in (a) in FIG. 5, a vehicle may display a virtual assistant (for example, a virtual pet Xiao A) on a display 201. In this case, a display area in which the virtual assistant is located is an area 501.

In an embodiment, when it is detected that a user 1 in a driver area sends a voice wakeup instruction "Xiao A Xiao A", the vehicle may display the virtual pet Xiao A on the display 201.

As shown in (b) in FIG. 5 and (c) in FIG. 5, when it is detected that the user 1 makes the beckoning gesture, the vehicle may display a zoomed-in virtual pet Xiao A on the display 201.

In an embodiment, when it is detected that the user 1 makes the beckoning gesture, the vehicle may display, on the display 201, animation effect of the virtual pet Xiao A running in a direction of the user.

In an embodiment, the beckoning gesture may be a gesture in which a palm faces upwards and four fingers wave toward a body side of the user.

For example, when it is detected that the user 1 makes the beckoning gesture, the virtual pet Xiao A may be displayed in the area 502, where a size of the area 502 is greater than a size of the area 501. In this way, the size of the display area of the virtual assistant is enlarged, so that the user can feel that the virtual pet Xiao approaches the user.

In an embodiment, when it is detected that the user 1 makes the beckoning gesture, the vehicle may display the zoomed-in virtual pet Xiao A on the display 201, including: When it is detected that a line-of-sight direction of the user 1 is on the virtual pet Xiao A and it is detected that the user 1 makes the beckoning gesture, the vehicle may display the zoomed-in virtual pet Xiao A on the display 201.

In an embodiment, when it is detected that the line-of-sight direction of the user 1 is on the virtual pet Xiao A and it is detected that the user 1 makes the beckoning gesture, the vehicle may display the zoomed-in virtual pet Xiao A on the display 201, including: When it is detected that duration in which the line-of-sight direction of the user 1 is on the virtual pet Xiao A is greater than or equal to preset duration, and it is detected that the user 1 makes the beckoning gesture, the vehicle may display the zoomed-in virtual pet Xiao A on the display 201.

In an embodiment, when it is detected that the user 1 makes the beckoning gesture, the vehicle may further send a voice signal through the virtual pet Xiao A, to respond to the beckoning gesture made by the user 1. For example, the vehicle may send voice information "Owner, I am coming" through the virtual pet Xiao A.

In this embodiment of this application, when it is detected that the user makes the beckoning gesture, the virtual pet may respond to the gesture operation by approaching the user. Interaction between the user and the virtual assistant is improved through body movement interaction. This helps improve human-machine interaction experience of the user.

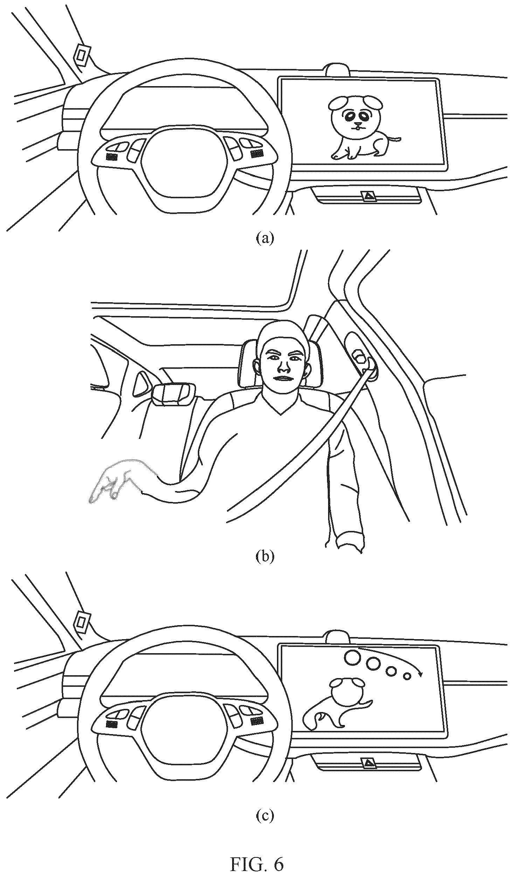

For example, FIG. 6 shows a group of GUIs according to an embodiment of this application.

As shown in (a) in FIG. 6, a vehicle may display a virtual assistant (for example, a virtual pet Xiao A) on a display 201.

As shown in (b) in FIG. 6 and (c) in FIG. 6, when a throw gesture (or a wool ball throwing gesture) of a user 1 is detected, the vehicle may display, on the display 201, animation effect of picking up a wool ball by the virtual pet Xiao A.

In an embodiment, when the throw gesture of the user 1 is detected, the vehicle may display, on the display 201, the animation effect of picking up the wool ball by the virtual pet Xiao A, including: When it is detected that a line-of-sight direction of the user 1 is on the virtual pet Xiao A and the throw gesture of the user 1 is detected, the vehicle may display, on the display 201, the animation effect of picking up the wool ball by the virtual pet Xiao A.

In an embodiment, when it is detected that duration in which the line-of-sight direction of the user 1 is on the virtual pet Xiao A is greater than or equal to preset duration, and the throw gesture of the user 1 is detected, the vehicle may display, on the display 201, the animation effect of picking up the wool ball by the virtual pet Xiao A.

In an embodiment, that the vehicle displays, on the display 201, the animation effect of picking up the wool ball by the virtual pet Xiao A includes: displaying, based on at least one of the line-of-sight direction of the user, a throw angle corresponding to the throw gesture, and a throw speed corresponding to the throw gesture, animation effect of looking for the wool ball by the virtual pet Xiao A.

For example, when it is detected that the user 1 throws the wool ball towards the right front of the vehicle, animation effect of picking up the wool ball by the virtual pet Xiao A towards the right front of the vehicle may be displayed.

For another example, when it is detected that the user 1 throws the wool ball towards the left front of the vehicle, animation effect of picking up the wool ball by the virtual pet Xiao A towards the left front of the vehicle may be displayed.

For another example, when it is detected that the line-of-sight direction of the user 1 is in the right front of the vehicle and the throw gesture of the user 1 is detected, the animation effect of picking up a wool ball by the virtual pet Xiao A toward the right front of the vehicle may be displayed.

For another example, when it is detected that a throw speed corresponding to the throw gesture of the user 1 is greater than or equal to a preset speed, animation effect of picking up the wool ball by the virtual pet Xiao A at a speed 1 may be displayed; or when it is detected that the throw speed corresponding to the throw gesture of the user 1 is less than a preset speed, animation effect of picking up the wool ball by the virtual pet Xiao A at a speed 2 may be displayed, where the speed 1 is greater than the speed 2.

In an embodiment, when it is detected that the line-of-sight direction of the user 1 in the driver area is not on the virtual pet Xiao A and a line-of-sight direction of a user 2 in the front passenger area is on the virtual pet Xiao A, a throw gesture of the user 2 may be used, animation effect of looking for the wool ball by the virtual pet Xiao A is displayed on the display 201.

In an embodiment, when it is detected that the line-of-sight direction of the user 1 in the driver area is not on the virtual pet Xiao A and the line-of-sight direction of the user 2 in the front passenger area is on the virtual pet Xiao A, the virtual pet Xiao A may be switched to be displayed on the display 202. The vehicle may display, on the display 202 based on the throw gesture of the user 2, animation effect of looking for the wool ball by the virtual pet Xiao A.

In an embodiment, a front-row area of the vehicle may include a long screen (or may be referred to as a long connected screen). For example, a central display screen and a front passenger screen in a vehicle cockpit may be a same screen. The screen may be divided into two display areas: an area 1 and an area 2. The area 1 may be a display area close to the driver area, and the area 2 may be a display area close to the front passenger area. When the user in the driver area gazes at the virtual assistant, an animation in which the virtual assistant responds to the pose of the user in the driver area may be displayed in the area 1 on the screen.

When the user in the driver area does not gaze at the virtual assistant and the user in the front passenger area gazes at the virtual assistant, animation effect of moving the virtual assistant from the area 1 to the area 2 may be displayed on the screen. This can increase a sense of intimacy when the user in the front passenger area interacts with the virtual assistant, and also helps improve intelligence of the vehicle.

After the virtual assistant moves from the area 1 to the area 2, the vehicle may control, based on the pose information of the user in the front passenger area, the virtual assistant to respond to the pose of the user in the front passenger area.

In this embodiment of this application, when the throw gesture of the user is detected, the virtual pet may respond to the throw gesture by picking up a wool ball. Interaction between the user and the virtual assistant is improved through body movement interaction. This helps improve human-machine interaction experience of the user.

In an embodiment, when it is detected that a multimedia apparatus in the cockpit plays a multimedia file (for example, music or a video) and a pose (for example, a body dance) change of the user is detected, animation effect of imitating the pose of the user by the virtual pet Xiao A may be displayed.

In an embodiment, the vehicle may display, on a display corresponding to an area in which the user is located, the animation effect of imitating the pose of the user by the virtual pet Xiao A.

For example, when the user 1 in the driver area dances with music, the animation effect of imitating a pose of the user in the driver area by the virtual pet Xiao A may be displayed on the display 201.

For another example, when the user 2 in the front passenger area dances with music, the animation effect of imitating the pose of the user in the front passenger area by the virtual pet Xiao A may be displayed on the display 202. Alternatively, if there is an association relationship between the user 2 and a virtual assistant B, animation effect of imitating the pose of the user by the virtual assistant B may be displayed on the display 202.

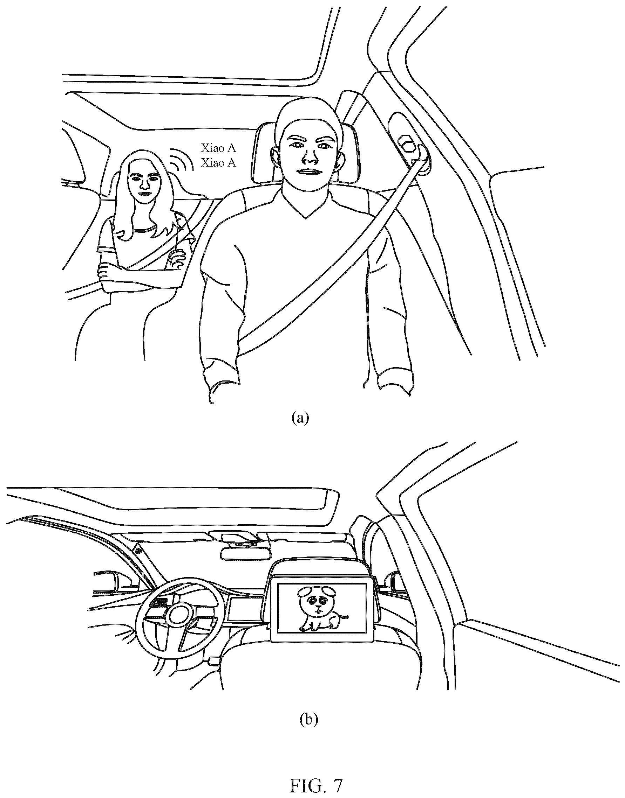

For example, FIG. 7 shows a group of GUIs according to an embodiment of this application.

For example, as shown in (a) in FIG. 7 and (b) in FIG. 7, when it is detected that a user 3 in a right area in a second row sends a voice instruction "Xiao A Xiao A", a virtual pet Xiao A may be displayed on a display 204.

In an embodiment, when a face pinch gesture, a touch gesture, a beckoning gesture, or a throw gesture of the user 3 is detected, an interaction action of the virtual pet Xiao A for a corresponding gesture may be displayed on the display 204.

In FIG. 3 to FIG. 7, the virtual assistant displayed on the screen is used as an example for description. This embodiment of this application is not limited thereto. For example, the virtual assistant may alternatively be a physical virtual assistant. For another example, the virtual machine assistant may also be displayed on a HUD.

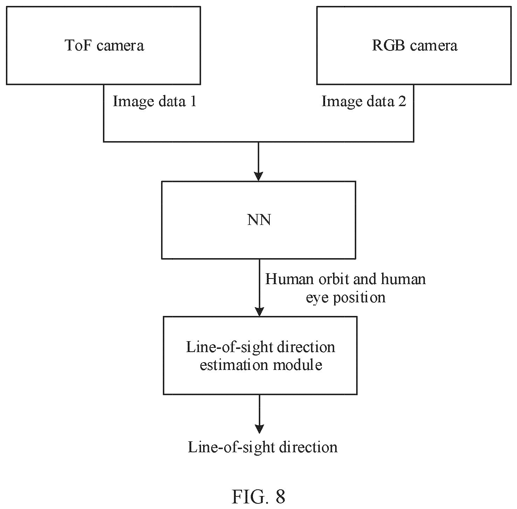

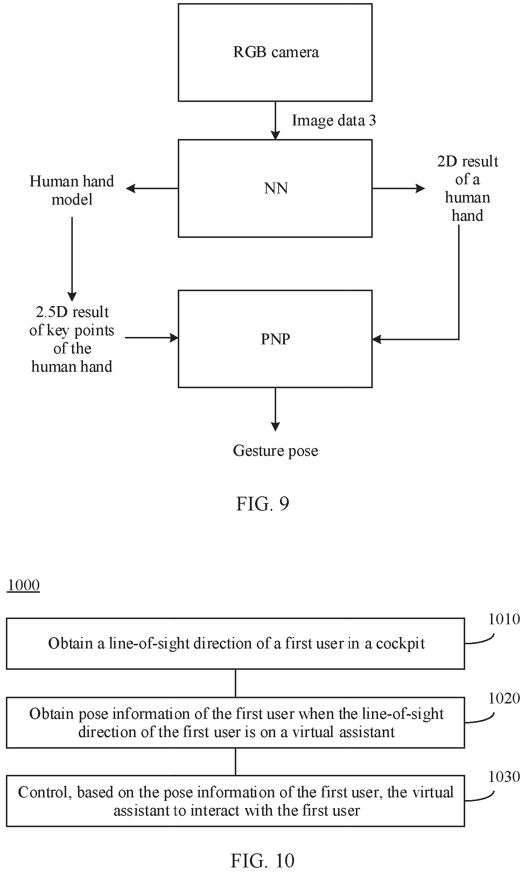

The foregoing describes several groups of GUIs provided in embodiments of this application with reference to FIG. 3 to FIG. 7. With reference to FIG. 8 and FIG. 9, the following describes a process of estimating a line-of-sight direction of a user and estimating a gesture pose of the user according to an embodiment of this application.

FIG. 8 is a diagram of estimating a line-of-sight direction of a user according to an embodiment of this application. When it is detected that there is a user in a driver area in a vehicle cockpit, image data 1 that is of the driver area and that is collected by using a time of flight (time of flight, ToF) camera and image data 2 that is of the driver area and that is collected by using a red green blue (red green blue, RGB) camera are input into a neural network (neural network, NN) 1, to output a human orbit and a human eye position of the user. The image data 1 and the image data 2 include a human face image of the user. The neural network herein may be a convolutional network, for example, Convolutional Networks. The human orbit and the human eye position are input into a line-of-sight direction estimation module, so that a line-of-sight direction of the user in the driver area can be estimated.

The NN 1 may be obtained through training by using labeled data. For example, a human face image 1 captured by using the ToF camera and the RGB camera when the human orbit is a human orbit 1 and the human eye position is a human eye position 1 may be captured, and labels of the human orbit 1 and the human eye position 1 are added to the human face image 1. In this case, the labeled human face image 1 may be used as labeled data. For another example, a human face image 2 captured by using the ToF camera and the RGB camera when the human orbit is a human orbit 2 and the human eye position is a human eye position 2 may be captured, and labels of the human orbit 2 and the human eye position 2 are added to the human face image 2. In this case, the labeled human face image 2 may be used as labeled data. The NN 1 may be trained by using labeled data.

FIG. 9 is a diagram of estimating a gesture pose of a user according to an embodiment of this application. As shown in FIG. 9, when it is detected that there is a user in a driver area in a vehicle cockpit, image data 3 that is of the driver area and that is collected by using the RGB camera may be input into an NN 2, so that a 2-dimensional (2-dimension, 2D) result of a human hand and a human hand model may be output. A 2.5-dimension (2.5-dimension, 2.5D) result of key points of the human hand can be determined based on the human hand model. Based on the 2.5D result of the key points of the human hand and the 2D result of the human hand, 3D key point positions of the entire human hand may be obtained according to a perspective-n-point (perspective-n-point, PNP) algorithm. A gesture pose of the user in the driver area may be obtained by inputting the 3D key point positions into a gesture pose estimation module.

Similarly, a human body pose of the user may be obtained with reference to the process shown in FIG. 9. For example, image data 4 that is of the driver area and that is collected by using the RGB camera may be input into an NN 3, so that a 2D result of a human body and a human body model may be output. A 2.5D result of key points of the human body can be determined based on the human body model. Based on the 2.5D result of the key points of the human body and the 2D result of the human body, 3D key point positions of the entire human body can be obtained according to a PNP algorithm. A human body pose of the user in the driver area may be obtained by inputting the 3D key point positions of the entire human body into a human body pose estimation module.

It should be understood that the process of estimating the line-of-sight direction and estimating the gesture pose of the user shown in FIG. 8 and FIG. 9 are merely examples. This embodiment of this application is not limited thereto. Alternatively, the line-of-sight direction, the gesture pose of the user, and the human body pose of the user may be determined in another manner. For example, the line-of-sight direction of the user may be further determined according to a three-dimensional model-based line-of-sight tracking algorithm or a two-dimensional appearance-based line-of-sight tracking algorithm. The three-dimensional model-based line-of-sight tracking algorithm may include a pupil (iris)-canthus method and a pupil (iris)-corneal reflection method. For another example, the gesture pose of the user may alternatively be estimated according to a convolutional pose machine (convolutional pose machine, CPM) algorithm.

FIG. 10 is a schematic flowchart of a human-machine interaction method 1000 according to an embodiment of this application. The method 1000 may be performed by a transportation means (for example, a vehicle); or the method 1000 may be performed by the foregoing computing platform; or the method 1000 may be performed by a system including a computing platform and a display apparatus; or the method 1000 may be performed by a system including a computing platform and a physical virtual apparatus; or the method 1000 may be performed by a system-on-a-chip (system-on-a-chip, SoC) on the computing platform; or the method 1000 may be performed by a processor on the computing platform. The method 1000 is applied to a cockpit of the transportation means, the cockpit includes a virtual assistant, and the method 1000 includes the following steps.

S1010: Obtain a line-of-sight direction of a first user in the cockpit.

For example, the line-of-sight direction of the first user in the cockpit may be determined based on image data collected by using a ToF camera and an RGB camera in the cockpit.

Optionally, obtaining the line-of-sight direction of the first user in the cockpit includes: obtaining the line-of-sight direction of the first user when the virtual assistant is in a wakeup state.

S 1020: Obtain pose information of the first user when the line-of-sight direction of the first user is on the virtual assistant.

Optionally, the pose information of the first user includes a gesture pose and/or a human body pose of the first user.

Optionally, the virtual assistant may be a virtual pet. The virtual pet may be set when the transportation means is delivered from a factory; or a plurality of virtual pets may be set when the transportation means is delivered from a factory, and a user may select a favorite virtual pet from the plurality of virtual pets.

Optionally, the method 1000 further includes: obtaining image information of a pet; and generating a virtual pet based on the image information of the pet. In this way, the user may upload a photo or a video of a pet of the user to the transportation means, so that the transportation means can generate a virtual pet based on the photo or the video of the pet. When the user interacts with the virtual pet, this helps improve a user's sense of intimacy with the virtual pet, thereby helping improve human-machine interaction experience of the user.

S1030: Control, based on the pose information of the first user, the virtual assistant to interact with the first user.

Optionally, the pose information of the first user includes a first gesture pose, and controlling, based on the pose information of the first user, the virtual assistant to interact with the first user includes: controlling, based on the first gesture pose, the virtual assistant to interact with the first user.

For example, the first gesture pose includes at least one of a face pinch gesture, a touch gesture, a beckoning gesture, and a throw gesture.

Optionally, the transportation means stores a mapping relationship between a gesture pose and an interaction action, and controlling, based on the first gesture pose, the virtual assistant to interact with the first user includes: controlling, based on the first gesture pose and the mapping relationship, the virtual assistant to interact with the first user through a first interaction action.

For example, Table 1 shows a mapping relationship between a gesture pose and an interaction action of the virtual assistant.

**Table 1**

| Gesture pose | Interaction action |
|---|---|
| Face pinch gesture | Face pinched-up |
| Touch gesture | Enjoy touching |
| Beckoning gesture | The virtual assistant approaches the user |
| Throw gesture | Pick up a wool ball |
| ... | ... |

The foregoing mapping relationship between the gesture pose and the interaction action is merely an example. This is not specifically limited in embodiments of this application.

In some possible implementations, before controlling, based on the first gesture pose, the virtual assistant to interact with the first user, the method 1000 further includes: detecting an operation of setting a mapping relationship between a first gesture pose and a first interaction action by the user.

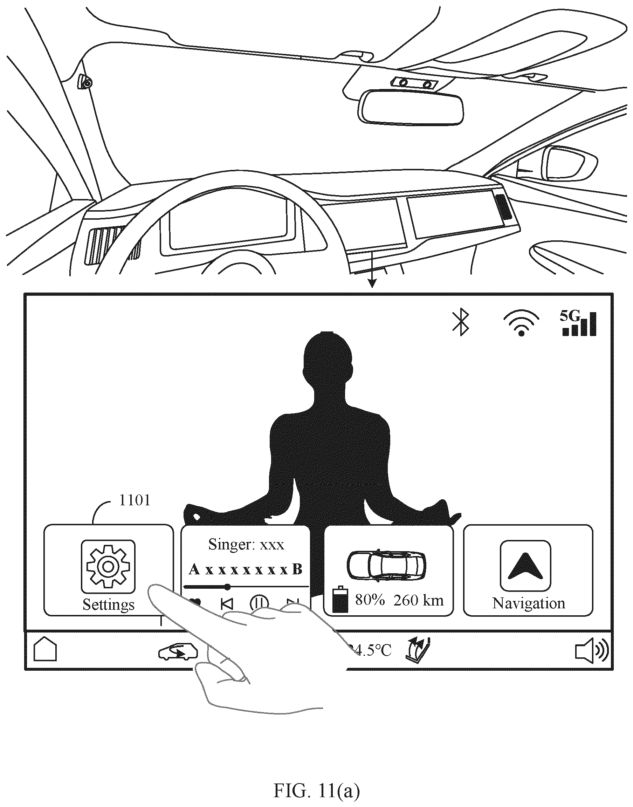

For example, FIG. 11(a) to FIG. 11(e) show another group of GUIs according to an embodiment of this application.

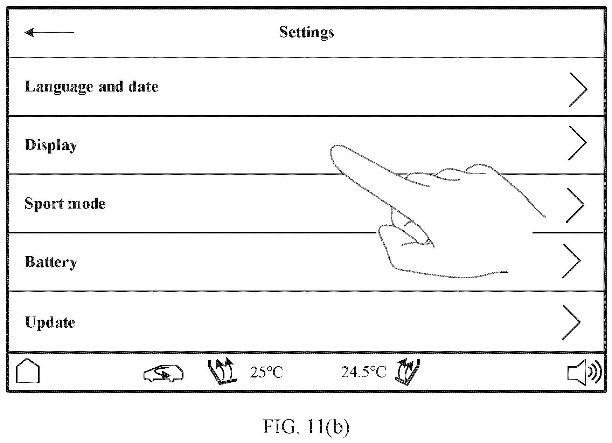

As shown in FIG. 11(a), a vehicle displays a home screen on a display. The home screen includes a widget 1101, and an icon of a setting function is displayed in the widget 1101. When the vehicle detects an operation of tapping the widget 1101 by a user, the vehicle may display, on the display, a GUI shown in FIG. 11(b).

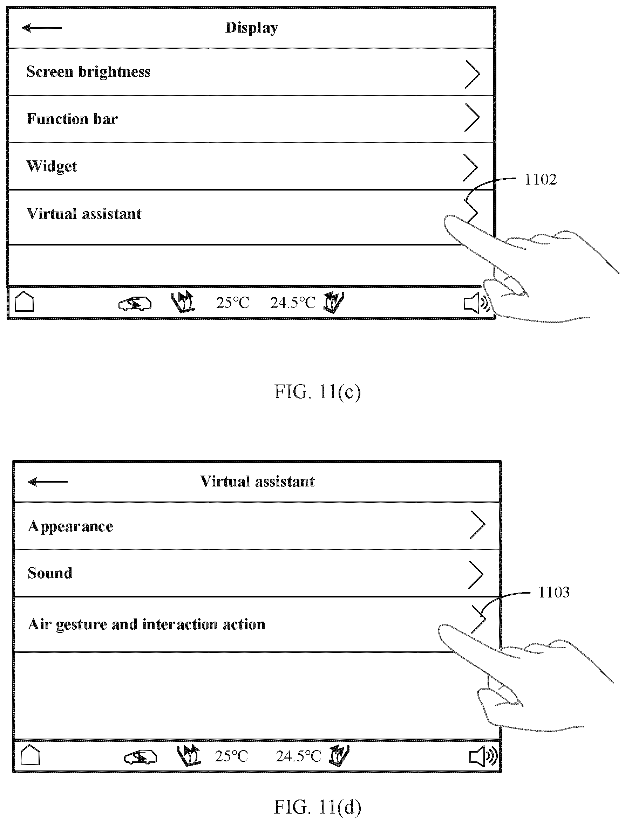

As shown in FIG. 11(b), in response to detecting the operation of tapping the widget 1101 by the user, the vehicle may display, on the display, a display interface of the setting function. The setting function includes functions such as language and date, display function, sport mode, battery, and update. When the vehicle detects an operation of tapping the display function by the user, the vehicle may display, on the display, a GUI shown in FIG. 11(c).

As shown in FIG. 11(c), in response to detecting the operation of tapping the display function by the user, the vehicle may display, on the display, a display interface of the display function. The display interface includes settings of screen brightness, function bar, widget, and virtual assistant. When the vehicle detects an operation of tapping a control 1102 by the user, the vehicle may display a GUI shown in FIG. 11(d).

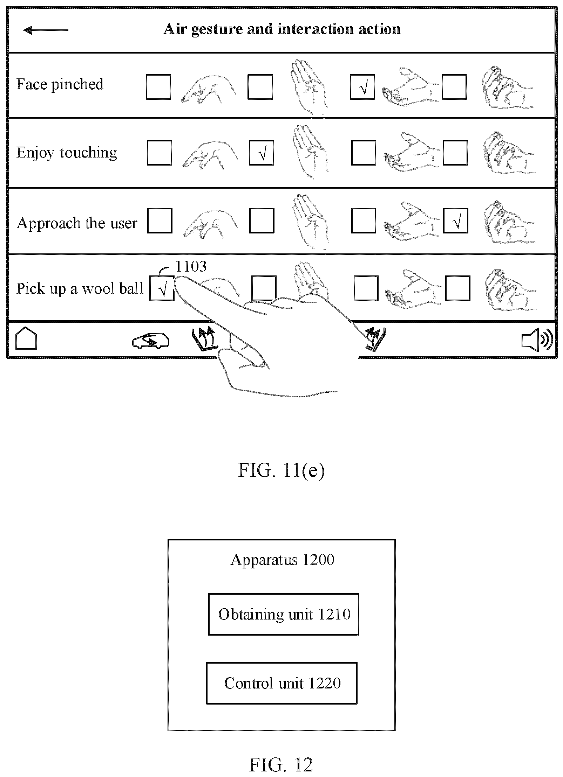

As shown in FIG. 11(d), the display interface is a setting interface of the virtual assistant. The setting interface includes settings of appearance and voice that are of the virtual assistant and correspondence between an air gesture and an interaction action. When an operation of tapping a control 1103 by the user is detected, a GUI shown in FIG. 11(e) may be displayed.

As shown in FIG. 11(e), in response to detecting the operation of tapping the control 1103 by the user, the vehicle may display, on the display, a setting interface of the correspondence between the air gesture and the interaction action. In the setting interface, the user may set the correspondence between the air gesture and the interaction action of the virtual assistant. For example, when the vehicle detects an operation of tapping the rectangular box 1103 by the user, the vehicle may set a correspondence between wool ball picking and the throw gesture. In this way, as shown in (b) in FIG. 6 and (c) in FIG. 6, when it is detected that the user gazes at the display and makes the throw gesture, the vehicle may display, on the display, animation effect of picking up a wool ball by the virtual pet.

In this embodiment of this application, the user may set, in the transportation means, the mapping relationship that is between the gesture pose and the interaction action of the virtual assistant and that is expected by the user, so that when the first gesture pose of the user is detected, the virtual assistant may be controlled, based on the mapping relationship that is between the gesture pose and the interaction action of the virtual assistant and that is set by the user, to interact with the first user through a corresponding interaction action. This improves human-machine interaction experience of the user, and also helps improve flexibility of setting a mapping relationship between a gesture pose and a virtual assistant interaction action.

Optionally, the pose information includes the throw gesture, and controlling the virtual assistant to interact with the first user includes: controlling, based on at least one of the line-of-sight direction of the first user, a throw angle corresponding to the throw gesture, and a throw speed corresponding to the throw gesture, the virtual assistant to respond to the throw gesture.

Optionally, controlling the virtual assistant to respond to the throw gesture includes: controlling the virtual assistant to perform an operation of picking up a ball, or displaying animation effect of a picking up a ball by the virtual assistant on the display.

Optionally, when the throw speed corresponding to the throw gesture is greater than or equal to a preset speed threshold, a speed at which the virtual assistant picks up a ball may be controlled to be a first speed; or when the throw speed corresponding to the throw gesture is less than a preset speed threshold, a speed at which the virtual assistant picks up a ball may be controlled to be a second speed, where the first speed is greater than the second speed.

For example, the preset speed threshold is 1 meter per second (m/s).

For example, a process of determining the throw speed corresponding to the throw gesture may be as follows: At a moment Ti, it is detected that the user makes the throw gesture. In this case, coordinates 1 of a point (for example, a point on a thumb) in the throw gesture in a vehicle coordinate system may be determined; and at a moment T₂, coordinates 2 of the point in the vehicle coordinate system are determined. A moving distance of the point from the moment T₁ to the moment T₂ may be determined based on the coordinates 1 and the coordinates 2. The throw speed corresponding to the throw gesture may be determined based on the distance and the duration between the moment T₁ and the moment T₂.

Optionally, the transportation means is a vehicle, the vehicle includes a driver area and a non-driver area, the first user is a user in the driver area, and the method 1000 further includes: when both the line-of-sight direction of the first user and a line-of-sight direction of a third user are on the virtual assistant, controlling, based on that the vehicle is in a driving state, the virtual assistant to interact with the third user, where the third user is a user located in the non-driver area.

In this way, when it is detected that line-of-sight directions of the user in the driver area and the user in the non-driver area are both on the virtual assistant and the vehicle is currently in the driving state, the virtual assistant may be controlled to interact with the third user. In this way, distraction caused to the driver area when the virtual assistant interacts with the user in the driver area can be avoided. In addition, a pose of the user in the driver area is not responded to, so that attention of the user in the driver area can be transferred to the driving vehicle, thereby helping improve safety of driving the vehicle by the user.

Optionally, the method 1000 further includes: prompting the first user to focus on driving the vehicle.

Optionally, the method 1000 further includes: when both the line-of-sight direction of the first user and a line-of-sight direction of a fourth user are on the virtual assistant, and the transportation means stores information about the first user but does not store information about the fourth user, controlling the virtual assistant to interact with the first user.

In this way, when a plurality of users expect to interact with the virtual assistant, the virtual assistant may be controlled, based on user information stored in the transportation means, to interact with the first user. This helps improve human-machine interaction experience between the virtual assistant and the user who has entered the user information into the transportation means, and also helps avoid interference caused by an interaction action of the virtual assistant to an unfamiliar passenger when the unfamiliar passenger watches the virtual assistant.

The information about the user may include biometric feature information of the user, for example, human face information and iris information.

Optionally, the pose information includes a human body pose, and controlling, based on the pose information of the first user, the virtual assistant to interact with the first user includes: controlling, based on the human body pose, the virtual assistant to interact with the first user.

Optionally, the method 1000 further includes: controlling a multimedia apparatus in the transportation means to play a multimedia file. Controlling, based on the pose information of the first user, the virtual assistant to interact with the first user includes: controlling the virtual assistant to imitate a pose of the first user in a process of playing the multimedia file.

**In** this way, in a process of playing the multimedia file, the virtual assistant may imitate the pose of the first user, to create a feeling of dancing with the virtual assistant for the user, thereby helping improve human-machine interaction experience of the user.

For example, the multimedia file may include music, a video, or the like.

Optionally, obtaining the pose information of the first user when the line-of-sight direction of the first user is on the virtual assistant includes: obtaining the pose information of the first user when duration in which the line-of-sight direction of the first user is on the virtual assistant is greater than or equal to preset duration.

**In** this way, when the duration in which the line-of-sight direction of the first user lasts on the virtual assistant is greater than or equal to the preset duration, the pose information of the first user is obtained. This helps further improve accuracy of responding to the pose of the user by the virtual assistant.

For example, the preset duration is 1s.

Optionally, the virtual assistant is a physical virtual assistant.

Optionally, the transportation means is a vehicle, the vehicle includes a front-row area and a rear-row area, and the physical virtual assistant is located in the front-row area of the transportation means.

Optionally, the method 1000 further includes: obtaining a line-of-sight direction of a second user in the rear-row area; when the line-of-sight direction of the second user is on the physical virtual assistant, controlling a display apparatus in the rear-row area to display a first image and obtaining human body pose information of the second user, where the first image includes an image of the physical virtual assistant; and controlling, based on the human body pose information of the second user, the display apparatus in the rear-row area to display a second image, where the second image includes an image, obtained in response to a human body pose of the second user, of the virtual assistant.

In this way, when the second user in the rear row expects to interact with the physical virtual assistant in the front row, image information of the physical virtual assistant may be displayed on the display apparatus in the rear row, and the display apparatus in the rear row may be controlled to display an image of interaction between the physical virtual assistant and the second user. In this way, a sense of alienation during interaction between the user in the rear row and the physical virtual assistant due to an excessively long distance can be avoided, and this helps improve human-machine interaction experience when the user in the rear row interacts with the physical virtual assistant.

Optionally, the virtual assistant is displayed on a display apparatus in the cockpit.

Optionally, controlling the virtual assistant to interact with the first user includes: controlling a first display apparatus in the cockpit to display a video or an animation in which the virtual assistant interacts with the first user.

Optionally, the first display apparatus is associated with an area in which the first user is located.

That the first display apparatus is associated with the area in which the first user is located includes: The first display apparatus is a display apparatus in the area in which the first user is located. For example, the first user is located in the driver area, and the first display apparatus may be a HUD or the display 201 in FIG. 2.

Optionally, the first display apparatus is a display apparatus located in the area in which the first user is located.

Optionally, the method 1000 further includes: obtaining a line-of-sight direction of a fifth user in the cockpit; when the line-of-sight direction of the fifth user is on the virtual assistant, switching from controlling the first display apparatus to display the virtual assistant to controlling a second display apparatus to display the virtual assistant, and obtaining pose information of the fifth user, where the second display apparatus is associated with an area in which the fifth user is located; and controlling, based on the pose information of the fifth user, the second display apparatus to display an image in which the virtual assistant interacts with the fifth user.

Optionally, that the second display apparatus is associated with the area in which the fifth user is located includes: The second display apparatus is a display apparatus in the area in which the fifth user is located. For example, the fifth user is a user in a front passenger area, and the second display apparatus may be the display 202 in FIG. 2.

In this way, when the line-of-sight direction of the fifth user in the cockpit is on the virtual assistant, controlling the first display apparatus to display the virtual assistant may be switched to controlling the second display apparatus to display the virtual assistant. In this way, it can be ensured that the virtual assistant is always displayed on the display apparatus closest to the user. This increases a sense of intimacy of interaction between the user and the virtual assistant, helps improve human-machine interaction experience of the user, and also helps improve intelligence of the transportation means.

Optionally, the method 1000 further includes: when the line-of-sight direction of the fifth user is on the virtual assistant, prompting the virtual assistant to be displayed on a display apparatus in the area in which the fifth user is located.

Optionally, prompting the virtual assistant to be displayed on the display apparatus in the area in which the fifth user is located includes: prompting, via a sound-making apparatus to make an alert tone, the virtual assistant to be displayed on the display apparatus in the area in which the fifth user is located.

Optionally, the sound-making apparatus may be a sound-making apparatus near the second display apparatus. In this way, the line-of-sight direction of the fifth user can be quickly switched from gazing at the virtual assistant on the first display apparatus to gazing at the virtual assistant on the second display apparatus, so that the fifth user can quickly find that the virtual assistant has been displayed on a display apparatus closest to the fifth user. This helps improve human-machine interaction experience of the user.

In this embodiment of this application, when the line-of-sight direction of the user is on the virtual assistant, the virtual assistant may be controlled to interact with the user based on the pose information of the user. In this way, the virtual assistant responds to a pose of the user, to help improve human-machine interaction experience when the user interacts with the virtual assistant; and the pose information of the user is obtained when the line-of-sight direction of the user is on the virtual assistant, to help reduce computing overheads of the transportation means, thereby helping reduce power consumption of the transportation means.

An embodiment of this application further provides a human-machine interaction apparatus configured to implement any one of the foregoing methods. For example, an apparatus is provided, including units (or means) configured to implement steps performed by a transportation means or a computing platform in any one of the foregoing methods.

FIG. 12 is a block diagram of a human-machine interaction apparatus 1200 according to an embodiment of this application. As shown in FIG. 12, the apparatus 1200 includes: an obtaining unit 1210, configured to obtain a line-of-sight direction of a first user in a cockpit of a transportation means, where the cockpit includes a virtual assistant, where the obtaining unit 1210 is further configured to obtain pose information of the first user when the line-of-sight direction of the first user is on the virtual assistant; and a control unit 1220, configured to control, based on the pose information of the first user, the virtual assistant to interact with the first user.

Optionally, the pose information includes at least one of a face pinch gesture, a touch gesture, a beckoning gesture, and a throw gesture.

Optionally, the pose information includes the throw gesture, and the control unit 1220 is configured to: control, based on at least one of the line-of-sight direction of the first user, a throw angle corresponding to the throw gesture, and a throw speed corresponding to the throw gesture, the virtual assistant to respond to the throw gesture.

Optionally, the control unit 1220 is configured to: control a multimedia apparatus in the transportation means to play a multimedia file; and control the virtual assistant to imitate a pose of the first user in a process of playing the multimedia file.

Optionally, the obtaining unit 1210 is configured to obtain the pose information of the first user when duration in which the line-of-sight direction of the first user is on the virtual assistant is greater than or equal to preset duration.

Optionally, the virtual assistant is a physical virtual assistant, or the virtual assistant is displayed on a display apparatus in the cockpit.

Optionally, the transportation means includes a front-row area and a rear-row area, and the virtual assistant is a physical virtual assistant located in the front-row area. The obtaining unit 1210 is further configured to obtain a line-of-sight direction of a second user in the rear-row area. The control unit 1220 is further configured to: when the line-of-sight direction of the second user is on the physical virtual assistant, control a display apparatus in the rear-row area to display a first image and obtain human body pose information of the second user, where the first image includes an image of the physical virtual assistant. The control unit 1220 is further configured to control, based on the human body pose information of the second user, the display apparatus in the rear-row area to display a second image, where the second image includes an image, obtained in response to a human body pose of the second user, of the virtual assistant.

Optionally, the virtual assistant is displayed on the first display apparatus, and the first display apparatus is associated with a first area in which the first user is located. The obtaining unit 1210 is further configured to obtain a line-of-sight direction of a third user in a second area. The control unit 1220 is further configured to: when the line-of-sight direction of the third user is on the virtual assistant, switch from controlling the first display apparatus to display the virtual assistant to controlling a second display apparatus to display the virtual assistant, where the second display apparatus is associated with the second area. The obtaining unit 1210 is further configured to obtain human body pose information of the third user. The control unit 1220 is further configured to control, based on the human body pose information of the third user, the second display apparatus to display a third image, where the third image includes an image, obtained in response to the human body pose information of the third user, of the virtual assistant.

Optionally, the virtual assistant is displayed on the first display apparatus, a material of the virtual assistant is an unrecoverable material. The control unit 1220 is configured to: before controlling the virtual assistant to interact with the first user, control the first display apparatus to display a first interaction image of the virtual assistant; control, based on human body pose information of the first user, the first display apparatus to display a second interaction image of the virtual assistant; and when the interaction between the virtual assistant and the first user ends, keep controlling the first display apparatus to display the second interaction image.

Optionally, the obtaining unit 1210 is configured to: when the virtual assistant is in a wakeup state, obtain the line-of-sight direction of the first user.

For example, the obtaining unit 1210 may be the computing platform in FIG. 1, or a processing circuit, a processor, or a controller on the computing platform in FIG. 1. For example, the obtaining unit 1210 is the processor 151 on the computing platform. The processor 151 may obtain pressure data collected by a seat pressure sensor. The processor 151 may determine, based on the pressure data, that there is a user in a driver area. The processor 151 may control a camera in the cockpit to collect image information of the driver area. The processor 151 may determine a line-of-sight direction of the user in the driver area based on the image information.

For another example, when it is determined that the line-of-sight direction of the user is on the virtual assistant, the processor 151 may further obtain pose information of the user based on the image information. Alternatively, when it is determined that the line-of-sight direction of the user is on the virtual assistant, the processor 151 may obtain data collected by a radar in the cockpit, and determine pose information of the user based on the data collected by the radar.

For another example, the control unit 1220 may be the computing platform in FIG. 1, or a processing circuit, a processor, or a controller on the computing platform in FIG. 1. For example, the control unit 1220 is the processor 152 on the computing platform. The processor 152 may control, based on the pose information obtained by the processor 151, the virtual assistant in the cockpit to interact with the user.

Functions implemented by the obtaining unit 1210 and functions implemented by the control unit 1220 may be implemented by different processors, or may be implemented by a same processor. This is not limited in embodiments of this application.

It should be understood that division into units in the apparatus is merely logical function division. During actual implementation, all or some of the units may be integrated into one physical entity or may be physically separated. In addition, a unit in the apparatus may be implemented in a form of invoking software by a processor. For example, the apparatus includes a processor, the processor is connected to a memory, the memory stores instructions, and the processor invokes the instructions stored in the memory, to implement any one of the foregoing methods or functions of units in the apparatus. For example, the processor is a general-purpose processor, for example, a CPU or a microprocessor, and the memory is a memory inside the apparatus or a memory outside the apparatus. Alternatively, a unit in the apparatus may be implemented in a form of a hardware circuit, and functions of some or all units may be implemented by designing the hardware circuit. The hardware circuit may be understood as one or more processors. For example, in an implementation, the hardware circuit is an ASIC, and functions of some or all units are implemented by designing a logical relationship between elements in the circuit. For another example, in another implementation, the hardware circuit may be implemented by using a PLD. An FPGA is used as an example. The FPGA may include a large number of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function based on a logical relationship of a hardware circuit, and the logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated and implemented in a form of a SoC. The SoC may include at least one processor, configured to implement any one of the foregoing methods or implement functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, if the apparatus is located in a transportation means, the processing unit may be the processors 151 to 15n in FIG. 1.

An embodiment of this application further provides a human-machine interaction system. The human-machine interaction system may include a computing platform and a physical virtual apparatus. The computing platform may include the human-machine interaction apparatus 1200.

An embodiment of this application further provides a human-machine interaction system. The human-machine interaction system may include a computing platform and a display apparatus. The computing platform may include the human-machine interaction apparatus 1200. The display apparatus is configured to display a virtual assistant.

For example, the display apparatus may include an in-vehicle display, for example, the display apparatus 130 in FIG. 1, or one or more of the display 201, the display 202, the display 203, or the display 204 in FIG. 2.

Optionally, the human-machine interaction system further includes one or more sensors.

An embodiment of this application further provides a transportation means. The transportation means may include the foregoing human-machine interaction apparatus or human-machine interaction system.

Optionally, the transportation means may be a vehicle.

An embodiment of this application further provides a computer program product. The computer program product includes computer program code. When the computer program code is run on a computer, the computer is enabled to perform the human-machine interaction method in the foregoing embodiment.

An embodiment of this application further provides a computer-readable medium. The computer-readable medium stores program code. When the computer program code is run on a computer, the computer is enabled to perform the human-machine interaction method in the foregoing embodiment.

An embodiment of this application further provides a chip, where the chip includes a circuit, and the circuit is configured to perform the human-machine interaction method in the foregoing embodiment.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in embodiments of this application, the memory may include a read-only memory and a random access memory, and provide instructions and data to the processor.

It should be further understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. A part or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A human-machine interaction method, applied to a cockpit of a transportation means, wherein the cockpit comprises a virtual assistant, and the method comprises:
obtaining a line-of-sight direction of a first user in the cockpit;
obtaining pose information of the first user when the line-of-sight direction of the first user is on the virtual assistant; and
controlling, based on the pose information of the first user, the virtual assistant to interact with the first user.

2. The method according to claim 1, wherein the pose information comprises at least one of a face pinch gesture, a touch gesture, a beckoning gesture, and a throw gesture.

3. The method according to claim 2, wherein the pose information comprises the throw gesture, and controlling the virtual assistant to interact with the first user comprises:
controlling, based on at least one of the line-of-sight direction of the first user, a throw angle corresponding to the throw gesture, and a throw speed corresponding to the throw gesture, the virtual assistant to respond to the throw gesture.

4. The method according to any one of claims 1 to 3, wherein the method further comprises:
controlling a multimedia apparatus in the transportation means to play a multimedia file; and
controlling, based on the pose information of the first user, the virtual assistant to interact with the first user comprises:
controlling the virtual assistant to imitate a pose of the first user in a process of playing the multimedia file.

5. The method according to any one of claims 1 to 4, wherein obtaining the pose information of the first user when the line-of-sight direction of the first user is on the virtual assistant comprises:
obtaining the pose information of the first user when duration in which the line-of-sight direction of the first user is on the virtual assistant is greater than or equal to preset duration.

6. The method according to any one of claims 1 to 5, wherein the virtual assistant is a physical virtual assistant, or the virtual assistant is displayed on a first display apparatus in the cockpit.

7. The method according to claim 6, wherein the transportation means comprises a front-row area and a rear-row area, and the virtual assistant is a physical virtual assistant located in the front-row area, and the method further comprises:
obtaining a line-of-sight direction of a second user in the rear-row area;
when the line-of-sight direction of the second user is on the physical virtual assistant, controlling a display apparatus in the rear-row area to display a first image and obtaining human body pose information of the second user, wherein the first image comprises an image of the physical virtual assistant; and
controlling, based on the human body pose information of the second user, the display apparatus in the rear-row area to display a second image, wherein the second image comprises an image, obtained in response to a human body pose of the second user, of the virtual assistant.

8. The method according to claim 6, wherein the virtual assistant is displayed on the first display apparatus, and the first display apparatus is associated with a first area in which the first user is located, and the method further comprises:
obtaining a line-of-sight direction of a third user in a second area;
when the line-of-sight direction of the third user is on the virtual assistant, switching from controlling the first display apparatus to display the virtual assistant to controlling a second display apparatus to display the virtual assistant, and obtaining human body pose information of the third user, wherein the second display apparatus is associated with the second area; and
controlling, based on the human body pose information of the third user, the second display apparatus to display a third image, wherein the third image comprises an image, obtained in response to a human body pose of the third user, of the virtual assistant.

9. The method according to claim 6, wherein the virtual assistant is displayed on the first display apparatus, a material of the virtual assistant is an unrecoverable material, and before controlling the virtual assistant to interact with the first user, the method comprises:
controlling the first display apparatus to display a first interaction image of the virtual assistant; and
controlling the virtual assistant to interact with the first user comprises:
controlling the first display apparatus to display a second interaction image of the virtual assistant; and
when the interaction between the virtual assistant and the first user ends, keeping controlling the first display apparatus to display the second interaction image.

10. The method according to any one of claims 1 to 9, wherein obtaining the line-of-sight direction of the first user in the cockpit comprises:
when the virtual assistant is in a wakeup state, obtaining the line-of-sight direction of the first user.

11. A human-machine interaction apparatus, comprising:
an obtaining unit, configured to obtain a line-of-sight direction of a first user in a cockpit of a transportation means, wherein the cockpit comprises a virtual assistant, wherein
the obtaining unit is further configured to obtain pose information of the first user when the line-of-sight direction of the first user is on the virtual assistant; and
a control unit, configured to control, based on the pose information of the first user, the virtual assistant to interact with the first user.

12. The apparatus according to claim 11, wherein the pose information comprises at least one of a face pinch gesture, a touch gesture, a beckoning gesture, and a throw gesture.

13. The apparatus according to claim 12, wherein the pose information comprises the throw gesture, and the control unit is configured to:
control, based on at least one of the line-of-sight direction of the first user, a throw angle corresponding to the throw gesture, and a throw speed corresponding to the throw gesture, the virtual assistant to respond to the throw gesture.

14. The apparatus according to any one of claims 11 to 13, wherein the control unit is configured to:
control a multimedia apparatus in the transportation means to play a multimedia file; and
control the virtual assistant to imitate a pose of the first user in a process of playing the multimedia file.

15. The apparatus according to any one of claims 11 to 14, wherein the obtaining unit is configured to:
obtain the pose information of the first user when duration in which the line-of-sight direction of the first user is on the virtual assistant is greater than or equal to preset duration.

16. The apparatus according to any one of claims **11** to 15, wherein the virtual assistant is a physical virtual assistant, or the virtual assistant is displayed on a first display apparatus in the cockpit.

17. The apparatus according to claim 16, wherein the transportation means comprises a front-row area and a rear-row area, and the virtual assistant is a physical virtual assistant located in the front-row area;
the obtaining unit is further configured to obtain a line-of-sight direction of a second user in the rear-row area;
the control unit is further configured to: when the line-of-sight direction of the second user is on the physical virtual assistant, control a display apparatus in the rear-row area to display a first image and obtain human body pose information of the second user, wherein the first image comprises an image of the physical virtual assistant; and
the control unit is further configured to control, based on the human body pose information of the second user, the display apparatus in the rear-row area to display a second image, wherein the second image comprises an image, obtained in response to a human body pose of the second user, of the virtual assistant.

18. The apparatus according to claim 16, wherein the virtual assistant is displayed on the first display apparatus, and the first display apparatus is associated with a first area in which the first user is located;
the obtaining unit is further configured to obtain a line-of-sight direction of a third user in a second area;
the control unit is further configured to: when the line-of-sight direction of the third user is on the virtual assistant, switch from controlling the first display apparatus to display the virtual assistant to controlling a second display apparatus to display the virtual assistant, wherein the second display apparatus is associated with the second area;
the obtaining unit is further configured to obtain human body pose information of the third user; and
the control unit is further configured to control, based on the human body pose information of the third user, the second display apparatus to display a third image, wherein the third image comprises an image, obtained in response to a human body pose of the third user, of the virtual assistant.

19. The apparatus according to claim 16, wherein the virtual assistant is displayed on the first display apparatus, and a material of the virtual assistant is an unrecoverable material;
the control unit is configured to: before controlling the virtual assistant to interact with the first user, control the first display apparatus to display a first interaction image of the virtual assistant;
control, based on human body pose information of the first user, the first display apparatus to display a second interaction image of the virtual assistant; and
when the interaction between the virtual assistant and the first user ends, keep controlling the first display apparatus to display the second interaction image.

20. The apparatus according to any one of claims 11 to 19, wherein the obtaining unit is configured to:
when the virtual assistant is in a wakeup state, obtain the line-of-sight direction of the first user.

21. A control apparatus, comprising:
a memory, configured to store a computer program; and
a processor, configured to execute the computer program stored in the memory, to enable the apparatus to perform the method according to any one of claims 1 to 10.

22. A control system, comprising a physical virtual assistant and a computing platform, wherein the computing platform comprises the apparatus according to any one of claims 11 to 21.

23. A control system, comprising a display apparatus and a computing platform, wherein the display apparatus is configured to display a virtual assistant, and the computing platform comprises the apparatus according to any one of claims 11 to 21.

24. A transportation means, comprising the control apparatus according to any one of claims **11** to 21, or comprising the control system according to claim 22 or 23.

25. The transportation means according to claim 24, wherein the transportation means is a vehicle.

26. A computer-readable storage medium, wherein the computer-readable storage medium stores a computer program, and when the computer program is executed by a computer, the method according to any one of claims 1 to 10 is implemented.

27. A chip, wherein the chip comprises a processor and a data interface, and the processor reads, through the data interface, instructions stored in a memory, to perform the method according to any one of claims 1 to 10.
